# EUROPEAN PATENT SPECIFICATION

(11) **EP 0 835 812 B1**
(45) Date of publication and mention of the grant of the patent: **01.03.2000**
(21) Application number: 97118844.6
(22) Date of filing: 05.09.1995
(51) Int. Cl.: B65C 9/00, B29C 63/00

(54) **Device for peeling off an edge portion of a sheet provided with released paper**
Abziehvorrichtung für den Rand eines mit Trennpapier versehenen Blattes
Dispositif pour détacher le bord d'une feuille pourvue d'un papier anti-adhésif

(30) Priority: 06.09.1994 JP 21238094
(43) Date of publication of application: 15.04.1998
(62) Divisional of application: 95113933.6
(73) Proprietor: KING JIM CO., LTD., Tokyo 101 (JP)
(72) Inventor: Watanabe, Kenji, Chiyoda-ku, Tokyo 101 (JP)
(74) Representative: Grünecker, Kinkeldey, Stockmair & Schwanhäusser Anwaltssozietät

(56) References cited:
- EP-A- 0 506 257
- EP-A- 0 526 213
- GB-A- 2 008 028

## Description

The present invention relates to an edge peeling device for peeling off an edge portion of a sheet provided with released paper, which is formed like elongated or wide tape, so as to facilitate peeling off the entire released paper.

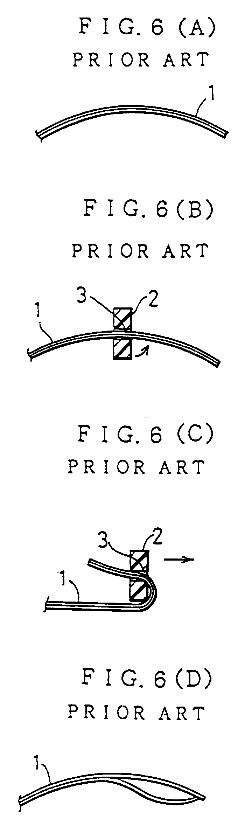

Generally, as a means for peeling off an edge portion of a sheet with released paper, there has been known a "method for peeling off released paper" described in the Japanese Patent Public Disclosure (kokai) No. 4-294734/1992 Official Gazette. This method for peeling off released paper will be described hereinbelow with reference to FIG. 6.
In this figure, reference numeral 1 designates a sheet with released paper; and 2 what is called a lettering pen. Further, an elongated hole 3, into which the sheet provided with released paper is inserted, is bored in the lettering pen 2.
When peeling the released paper away from the sheet 1 provided with the released paper, the sheet 1 provided with the released paper 1 is first inserted into the elongated hole 3 bored in the lettering pen 2.
Subsequently, the sheet 1 provided with the released paper is pulled out of the elongated hole 3 by rotating the lettering pen 2 by 180 degrees.
The mentioned Japanese document also discloses a device according to the preamble of claim 1.
The aforementioned conventional means for peeling off an edge portion of a sheet provided with released paper, however, has a drawback in that the peeling-off of released paper from the sheet provided with the released paper is very troublesome because the operations of inserting the sheet 1 provided with the released paper into the elongated hole 3, of rotating the lettering pen 2 to 180 degrees by holding the inserted sheet 1 provided with the released paper, and of pulling out the sheet 1 provided with the released paper by one of operator's hands while holding the lettering pen 2 by the other hand should be manually performed.

Accordingly, it is an objective of the present invention to provide an edge peeling device for peeling off an edge portion of a sheet provided with released paper, by which an edge portion of the sheet can be easily peeled off.

According to the present invention, this objective is performed by an edge peeling device according to claim 1.

Preferred embodiments of the invention are laid down in the further dependent claims.

Hereinafter the present invention is illustrated and explained in greater detail by means of preferred embodiments in conjunction with the accompanying drawings wherein:
FIG. 1 is a sectional plan view of an edge peeling device according to a first embodiment;
FIG. 2 is a sectional plan view of an edge peeling device according to a second embodiment;
FIGS. 3 and 4 are schematic diagrams for illustrating working conditions or states of the edge peeling device, according to the first and second embodiments;
FIG. 5 is a sectional diagram for illustrating the configuration of tape; and
FIGS. 6 (A) to 6 (D) are schematic diagrams for illustrating the conventional method for peeling off released paper.

### First Embodiment

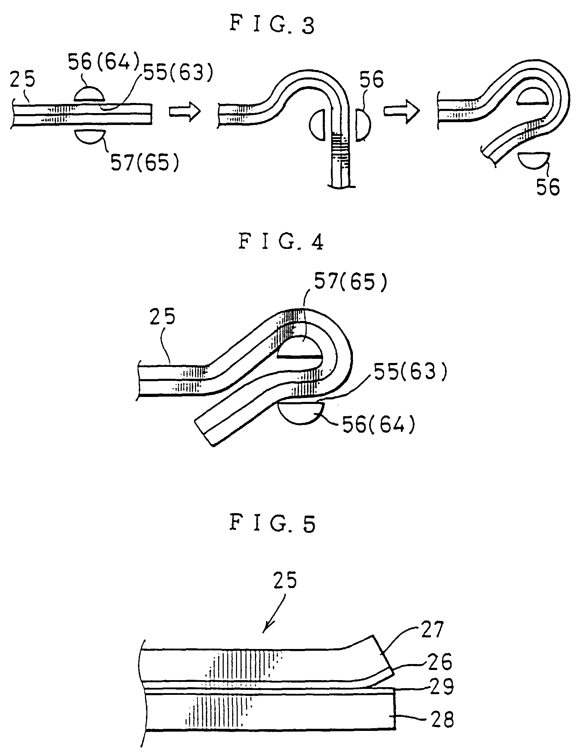

In the case of this embodiment, printing tape 25, is used as a sheet with released paper. As illustrated in FIG. 5, this tape 25 consists of: adhesive sheet or paper 27, on a side face of which a sensitive adhesive 26 is applied; released paper 28 for covering the adhesive 26 of this adhesive sheet or paper 27; and a silicone layer 29 for facilitating the peeling of this released paper 28 from the adhesive 26. Furthermore, polyester, paper or the like may be used as the material of the adhesive sheet 27. Additionally, polyester, polypropylene or the like may be used as the material of the released paper 28.

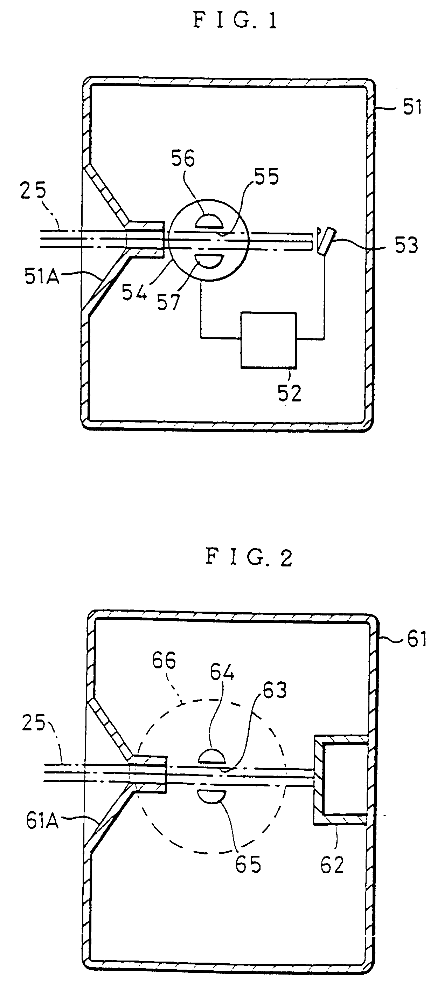

Hereunder, an edge peeling device of this embodiment will be described with reference to FIG. 1.
In this figure, reference numeral 51 designates a case composing a casing of the edge peeling device. A guide portion 51A for guiding tape 25 (to be described later) and inserting this tape into the case is provided on a side surface of this case 51 (namely, a left side surface thereof as viewed in FIG. 1).
In the case of the edge peeling device of this embodiment, an edge portion of the tape 25 is bent. Further, the released paper 28 of the tape 25 is peeled away from the adhesive sheet 27 thereof by utilizing the difference between the outer and inner radii (namely, the difference in length between the outer and inner circumferences) of the bent part of the tape 25.
Moreover, a limit switch 53 for imposing a limitation on the length of an inserted part of the tape 25 (namely, on a position into which the tape 25 is inserted) is connected to the control portion 52. This limit switch 53 is provided in a side end portion of the case 51 (namely, a right-side end portion thereof as viewed in FIG. 1) which is on a prolonged or extension line of the inserted tape 25.
The control portion 52 is established in such a manner as to control the following sequence of operations. Namely, in response to a signal indicating that the tape 25 is put into abutting engagement with the limit switch 53, the drive motor 54 is activated so as to rotate.
Further, in the case of this embodiment, a slit portion 55 is connected to the drive motor 54. This slit portion 55 has a slit into which the tape 25 can be loosely inserted by leaving some clearance between each of the inner surfaces of the slit and the corresponding outer surface of the tape 25. Practically, the slit portion 55 consists of a pair of clipping rods 56 and 57 placed on both sides of the tape 25, respectively, in such a way as to sandwich the tape 25 therebetween, which is guided by the guide portion 51A and extends in the case 51, and in such a manner that a gap or slit, the width of which is a little wider than the thickness of the tape 25, is provided therebetween. The pair of clipping rods 56 and 57 are connected to the drive motor 54.
In the case of the device having the aforementioned configuration, the tape 25 is first inserted into the case 51 from the guide portion 51A. When the inserted tape 25 is put into abutting engagement with the limit switch 53, the drive motor 54 is activated by the control portion 52 to rotate the slit portion 55 from a position where the angle between the inner flat surface of, for example, the rod 57 and the direction, in which the tape 25 is inserted, is 180 degrees as illustrated in FIG. 3, to another position where the slip portion 55 is turned further 180 degrees, namely, the angle therebetween becomes 360 degrees as illustrated in FIG. 4. Thereafter, the tape 25 is pulled out of the case 51 by hand. Then, such a tape 25 is drawn through an operator's hands.
Thereby, the released paper 28 of the tape 25 is peeled away from the adhesive sheet 27 thereof.
As described above, the released paper 28 can be easily peeled away from the edge portion of the tape 25 only by inserting the tape 25 from the guide portion 51A and thereafter pulling the tape 25 out of the case 51.

### Second Embodiment

An edge peeling device according to this embodiment will be described hereinbelow with reference to FIG 2. The edge peeling device of this embodiment is obtained by changing the edge peeling device of the aforementioned first embodiment into a device of the manually-operated type.
A stopper 62 is provided in addition to a guide portion 61A in a case 61. A slit portion 63 is provided on a prolonged line of the tape 25 extending in the case 61 by being guided by the guide portion 61A. This slit portion 63 consists of a pair of clipping rods 64 and 65, similarly as in the case of the slit portion 55 of the aforementioned first embodiment. The pair of the clipping rods 64 and 65 are connected to a manually operated knob 66 mounted on the outer surface of the case 61.
In the case of this embodiment having the aforementioned configuration, the tape 25 is first inserted into the slit portion 63 by being guided by the guide portion 61A. When the inserted tape 25 is put into abutting engagement with the stopper 62, the knob 66 is turned to rotate the slit portion 63 from a position where the angle between the inner flat surface of, for example, the rod 65 and the direction, in which the tape 25 is inserted, is 180 degrees as illustrated in FIG. 3, to another position where the slit portion 63 is turned further 180 degrees, namely, the angle therebetween becomes 360 degrees as illustrated in FIG 4. When the slit portion 63 is in this state as illustrated in FIG. 4, the tape 25 is pulled out of the case 51 by hand. Then, such a tape 25 is drawn through an operator's hands.
Thereby, the second embodiment can have effects or advantages similar to those of the aforementioned first embodiment.

### Examples of Modifications of Embodiments

Incidentally, in the case of each of the aforesaid embodiments, the tape 25 is used as a sheet provided with released paper. However, even in the case of a modification using wider sheet-like tape as the sheet provided with released paper, effects and advantages similar to those of the aforementioned embodiments can be obtained.
Additionally, in cases of the aforementioned second embodiment, the knob 66 is used as the grasp portion. A crank-like lever, however, may be used instead of the knob. Thereby, this modification can have effects or advantages similar to those of the aforementioned embodiments.
As above described in detail, in the cases of the edge peeling devices of the present invention, an edge portion of a sheet provided with released paper is peeled away therefrom only by inserting the sheet the device and thereafter pulling the inserted sheet out of the device. Consequently, the released paper can be extremely easily peeled away from the sheet.
Although the preferred embodiments of the present invention have been described above, it should be understood that the present invention is not limited thereto and that the scope of the present invention, therefore, is to be determined solely by the appended claims.

## Claims

1. Edge peeling device for peeling off an edge portion of a sheet (25) provided with released paper, which sheet has an adhesive paper layer (27), onto a side surface of which an adhesive (26) is applied, and a released paper layer (28) for covering the adhesive, the edge peeling device comprising:
a slit portion (55,63) to which the sheet (25) provided with released paper is loosely inserted by leaving a clearance between the inner surface thereof and the corresponding surface of the sheet,
**characterized in that**
the edge peeling device further comprises a drive unit for rotating the slit portion (55,63);and
a guide portion (51A,61A) for guiding insertion of the sheet (25) provided with released paper, wherein
the slit portion is placed on an extension line of the sheet (25) extending in the device by being guided by the guide portion (51A,61A), and
the sheet (25) provided with the released paper is guided by the guide portion (51A,61A) and is inserted into the slit portion (55,63), and subsequently, the slit portion (55) is turned by the drive unit, and thereafter, the sheet (25) provided with released paper is pulled out of the guide portion (51A,61A), whereby the released paper layer (28) is peeled away from the adhesive paper layer (27).

2. Edge peeling device according to claim 1, wherein the drive unit consists of a drive motor (54) connected to a driving gear, a limit switch (53) for imposing a limitation on a position into which the sheet (25) provided with released paper is inserted, and a control portion (52) for driving the drive motor (54) according to a signal sent from the limit switch (53).

3. Edge peeling device according to claim 1, wherein the drive unit is constituted by a grasp portion (66) which is connected to the slit portion (63) and is used for manually rotating the slit portion (63).

## Patentansprüche

1. Kantenabziehvorrichtung zum Abziehen eines Kantenabschnittes von einem Blatt (25), das mit einem Ablösepapier versehen ist, wobei das Blatt eine Klebepapierschicht (27) aufweist, an dessen Seitenoberfläche ein Kleber (26) angebracht ist, und eine Ablösepapierschicht (28) zum Abdecken des Klebers aufweist, wobei die Kantenabziehvorrichtung umfaßt:
einen Schlitzabschnitt (55,63), in dem das Blatt (25), das mit einem Ablösepapier versehen ist, lose durch Belassen eines Zwischenraums zwischen dessen innerer Oberfläche und der zugehörigen Oberfläche des Blattes eingesetzt ist,
**dadurch gekennzeichnet, daß**
die Kantenabziehvorrichtung weiterhin eine Antriebseinheit zum Drehen des Schlitzabschnittes (55,63) aufweist; und
einen Führungsabschnitt (51a,61a) aufweist, zum Führen des Einsetzens des Blattes (25), das mit einem Ablösepapier versehen ist, wobei
der Schlitzabschnitt an einer Erstreckungslinie des Blattes (25) angeordnet ist, das sich in die Vorrichtung erstreckt in dem es durch den Führungsabschnitt (51a,61a) geführt wird, und
das Blatt (25), das mit dem Ablösepapier versehen ist, ist durch den Führungsabschnitt geführt und in den Schlitzabschnitt (55,63) eingesetzt, und nachfolgend wird der Schlitzabschnitt (55) durch die Antriebseinheit gedreht, und danach wird das Blatt (25), das mit dem Ablösepapier versehen ist, aus dem Führungsabschnitt (51a,61a) herausgezogen, wodurch die Ablösepapierschicht (28) von der Klebepapierschicht (27) abgezogen wird.

2. Kantenabziehvorrichtung nach Anspruch 1, wobei die Antriebseinheit aus einem Antriebsmotor (54), der mit einem Antriebszahnrad verbunden ist, einen Begrenzungsschalter, um eine Begrenzung der Position zu erreichen, in die das Blatt (25), das mit Ablösepapier versehen ist, eingesetzt ist, und einen Steuerabschnitt (52) zum Antrieb des Antriebsmotors (54) gemäß einem Signal, das von dem Begrenzungsschalter (53) ausgesandt ist, besteht.

3. Kantenabziehvorrichtung nach Anspruch 1, wobei die Antriebseinheit durch einen Griffabschnitt (66) gebildet ist, der mit dem Schlitzabschnitt (63) verbunden ist und zur manuellen Drehung des Schlitzabschnitts (63) verwendet ist.

## Revendications

1. Dispositif pour détacher un bord destiné à détacher une partie du bord d'une feuille (25), constituée avec un papier anti-adhésif, ladite feuille présentant une couche en papier adhésif (27), sur une surface du côté de laquelle on applique un adhésif (26), et présentant une couche en papier anti-adhésif (28) destinée à couvrir l'adhésif, le dispositif pour détacher un bord comprenant :
une partie formant fente (55, 63), dans laquelle on insère de manière lâche la feuille (25) constituée avec un papier anti-adhésif, en laissant un dégagement entre sa surface intérieure et la surface correspondante de la feuille,
caractérisé en ce que
le dispositif pour détacher un bord comprend en outre
un ensemble entraînant destiné à faire tourner la partie formant fente (55, 63) ; et
une partie de guidage (51A, 61A) destinée à guider une insertion de la feuille (25) constituée avec des papiers anti-adhésifs, dans laquelle
on fait placer la partie formant fente sur une ligne de prolongement de la feuille (25) se déployant dans le dispositif, en étant guidée par la partie de guidage (51A, 61A), et
on fait guider la feuille (25), constituée avec le papier anti-adhésif, par La partie de guidage (51A, 61A), et on l'insère dans la partie formant fente (55, 63), et par la suite, on fait tourner par l'ensemble entraînant la partie formant fente (55), et enfin, on enlève la feuille (25) constituée avec le papier anti-adhésif de la partie de guidage (51A, 61A), de sorte que l'on détache en écartant la couche en papier anti-adhésif (28) à partir de la couche en papier adhésif (27).

2. Dispositif pour détacher un bord selon la revendication 1, dans lequel l'ensemble entraînant consiste en un moteur entraînant (54) connecté à un engrenage d'entraînement, en un contacteur de fin de course (53) destiné à imposer une limitation sur une position dans laquelle on insère la feuille (25) constituée avec un papier anti-adhésif, et en une partie de régulation (52) destinée à commander le moteur d'entraînement (54) conformément au signal émis par le contacteur de fin de course (53).

3. Dispositif pour détacher un bord selon la revendication 1, dans lequel on constitue l'ensemble entraînant avec une partie de préhension (66), que l'on connecte à la partie formant fente (63), et que l'on utilise pour faire tourner manuellement la partie formant fente (63).
